# EUROPEAN PATENT APPLICATION

(11) **EP 2 757 736 A1**
(43) Date of publication of application: **23.07.2014**
(21) Application number: 13151981.1
(22) Date of filing: 19.01.2013
(51) Int. Cl.: H04L 9/00

(54) **Secure streaming method in a numerically controlled manufacturing system, and a secure numerically controlled manufacturing system**

(71) Applicant: Fabulonia OÜ, 11415 Tallinn (EE)
(72) Inventor: Isbjörnssund, Kimmo, 10116 Tallinn (EE); Vedeshin, Anton, 11711 Tallinn (EE)
(74) Representative: Koppel, Mart Enn

(57) **Abstract**

Secure streaming method in a numerically controlled manufacturing system, where the 3D file of the 3D object such as a CAD file or STL file is not sent to the manufacturing machine, but is kept in a secured system. Instead, only the instructions for controlling the manufacturing machine (e.g., so called G-codes) are streamed to the manufacturing machine. Such instructions are secured so that only a specific manufacturing machine can make use of them. To this end, the set of instructions may be encoded, e.g., hashed on a secure server, using a server hash table while the manufacturing machine is provided with a local lookup hash table that is synchronized, e.g., loosely synchronized with the server's hash table for converting the hashed instructions back to instructions suitable for operating the manufacturing machine.

## Description

### Technical Field

The present invention relates to numerically controlled manufacturing systems, including rapid manufacturing and prototyping machines and systems, both by additive and subtractive methods, including 3D printing devices, with secure streaming of instructions for operating a manufacturing machine from a secure streaming server over a connection channel to a manufacturing machine.

### Background Art

Rapid manufacturing and rapid prototyping are relatively new class of technologies that can automatically construct physical 3D objects from Computer-Aided Design (CAD) data. Usually these methods make use of additive manufacturing technologies such as 3D printers.

3D printing or additive manufacturing (AM) is a process of joining materials to make objects from 3D model data, usually layer upon layer, as opposed to subtractive manufacturing methodologies, such as traditional machining where the object is shaped by removing material. Several technologies are available for industrial uses, including for rapid prototyping and rapid manufacturing but increasingly so also for domestic and hobbyist uses. 3D printing is rapidly becoming as widespread as traditional 2D printing has become long ago.

Combining 3D printing with 3D scanning makes possible 3D copying, i.e., a process where first a digital 3D model of an object is made by 3D scanning of the object and then a 3D copy of the 3D object is made by 3D reproducing the object similarly to the process of digital 2D copying.

It is well known that 2D printing and copying can be used to make copies of copyrighted materials or other materials protected by other types of intellectual property rights. While some technologies exist to inhibit copying, e.g., documents with security features such as watermarks, holograms, straps, UV or IR glowing, etc; however, no universally applicable technology exists to control reproducing and copying of copyrighted materials or other protected materials.

The problem becomes even more important in 3D printing and copying. For example, 3D objects can be subjects to different types of intellectual property rights independent from each other, including copyright (e.g., as sculptures, figurines, architectural objects, etc), industrial design (known in the US as design patent; e.g., a new shape of a product such as a vase or a chair), 3D trademark, by a patent (invention patent in the US) or a utility 3D model, or by personality rights (e.g., the likeness of a person). While certain fair use provisions may exist in copyright law (or analogous provisions for design patent or invention patent) allowing in some cases making copies for non-commercial private use, making copies of such 3D objects protected by intellectual property rights is prohibited at least for business purposes without a prior explicit permission (a license) from the right holder.

Known is US8286236 to Jung, titled Manufacturing control system, disclosing a method for secure manufacturing to control object production rights, such method comprises identifying at least one object data file configured to produce an object by a manufacturing machine; confirming that an authorization code is associated with the object data file, the authorization code configured to be received by the manufacturing machine, the manufacturing machine adapted to receive the authorization code; and enabling the manufacturing machine to interface with the object data file only if the authorization code meets one or more predetermined conditions, wherein the manufacturing machine is configured for at least one or more of additive manufacturing, subtractive manufacturing, extrusion manufacturing, melting manufacturing, solidification manufacturing, ejection manufacturing, die casting, or a stamping process. This approach is not secure enough as the 3D file can be freely copied and distributed and once the code is broken, the 3D file can be distributed without any control.

Known is WO2012/146943 to Within Technologies Ltd, titled Improvements for 3D design and manufacturing systems, disclosing a method of authenticating the printing of a three-dimensional (3D) article at a 3D printer according to an encrypted 3D print file describing a 3D design. The method comprises: receiving an authentication request from a 3D print server that is associated with the 3D printer, the request comprising a unique design identifier associated with a 3D design file and a unique 3D printer identifier associated with a 3D printer, the received unique 3D design identifier being related to the received 3D printer identifier in accordance with a first relationship; using at least one of the received unique identifiers to access a verifying 3D design identifier and a verifying 3D printer identifier, the verifying identifiers being related to each other in accordance with a second relationship; comparing the first and second relationships between the received and verifying identifiers; generating an authentication signal if the first relationship corresponds with the second relationship; obtaining a decryption key associated with the received identifiers in response to the authentication signal; and transferring the decryption key to the 3D print server to authenticate and enable the printing of the 3D article on the 3D printer. This solution may be considered as closest prior art.

Known methods are based on providing the 3D file with an authorization code or identifier for determining the authenticity of the 3D file. The use of the 3D file is controlled by the user right to access or print the 3D file. While these methods are suitable to inhibit unauthorized use of the 3D file itself, this approach is in fact misplaced as the object that is protected by copyright, design right or other intellectual property rights is not the file, but the 3D object itself. While modifying the file can be perfectly legal, the prohibited activity is the unauthorized reproduction of the 3D object itself.

While it is important to allow users and manufacturers to determine if any restrictions exist on reproducing a 3D object, in preferred cases there must also be a mechanism in place to actually prevent the unauthorized reproduction of the 3D object. As the 3D file itself representing the 3D object according to this scenario does not necessarily have any means attached preventing unauthorized use of the 3D file, the known methods cannot be used. The authorization means must be integrated with the manufacturing device itself, e.g., before each manufacturing work, the manufacturing device needs an authorization from the rights holder, or confirmation that no restrictions are known to exist.

The method similar to WO2012/146943 could be used, i.e., all the 3D files could be received from and sent through a service provider who modifies the 3D files by encrypting the file and providing it with identification codes. However, even though the 3D files that are transmitted in the system are encrypted, they can be copied, saved, intercepted and thus, misused, e.g., by breaking the code and after that making the 3D files available in the Internet or through file sharing solutions. Therefore, more secure system is needed.

What is needed, therefore, is a more secure method and system where the 3D model of a 3D object is safe from unauthorized use, but the 3D object can nevertheless be manufactured in a numerically controlled manufacturing system.

### Summary of invention

The goal of the invention is achieved by a method and a system where the original 3D file of the 3D object such as a CAD file or STL file is not sent to the manufacturing machine, but is kept in a secured system and instead, only the instructions for controlling the manufacturing machine (e.g., so called G-codes) that are specific to this manufacturing machine are streamed to the manufacturing machine. Furthermore, such instructions are secured so that only a specific manufacturing machine can make use of them. Such manufacturing machine must be equipped with means for processing or converting said instructions into a format suitable for operating said manufacturing machine. To this end, the set of instructions may be encoded, e.g., hashed on a secure server, using a server hash table while the manufacturing machine is provided with a local lookup hash table that is synchronized, e.g., loosely synchronized with the server's hash table for converting the hashed instructions back to instructions suitable for operating the manufacturing machine. For example, time based or some common event or action based loose synchronization can be used.

According to one embodiment of the invention, a streaming method in a secure manufacturing system which comprises a streaming server and a numerically controlled manufacturing machine connected to said streaming server over a communication channel, the method comprises the steps of providing to the streaming server a model of a 3D object to be manufactured (hereinafter: 3D model) by said manufacturing machine, on said streaming server, converting said 3D model into a set of instructions for operating said manufacturing machine; encoding said set of instructions into a set of encoded instructions by applying simultaneously or in sequence one or more processes such as calculating a set of hashed instructions by applying a cryptographic hash function to said set of instructions, calculating a set of obfuscated instructions by applying obfuscation function to said set of instructions, applying arithmetic coding to said set of instructions, applying digital fingerprints, calculating checksums, calculating hash values, calculating digital DNA, and encrypting said set of instructions; and outputting said set of instructions to said manufacturing machine over said communication channel.

3D models secured streaming algorithm is using one way functions, i.e., functions that produce easy to compute strings for any given streaming block, but from these strings it is not possible to generate initial block. Also, it is impossible to modify the initial block without modifying said string. Moreover it is infeasible to find two different blocks which correspond to the same generated string. The cryptographic hash functions include such well known functions such as message digest algorithms (MD4, MD5), secure hash algorithms (SHA-1, SHA-2, SHA-3), Skein, Keccak, RadioGatun, PANAMA, and many others. The ideal cryptographic hash function has four main properties: it is easy to compute the hash value for any given message; it is infeasible to generate a message that has a given hash; it is infeasible to modify a message without changing the hash; it is infeasible to find two different messages with the same hash. Instead of cryptographic hash functions, non-cryptographic hash functions can be used as well as other one way functions having similar properties (i.e., easy to compute on every input, but hard to invert given the image of a random input) can be used for hashing. Even though general purpose hash functions can be used, also special purpose hash function can be designed, taking into account the nature of the data to be hashed (i.e., the instructions for controlling the manufacturing machine). Checksum functions, cyclic redundancy checks, checksums and fingerprinting functions can be used for hashing. Hashing can be performed using nonlinear table lookup.

According to another embodiment, on said streaming server a server hash table is generated; said set of instructions are hashed into a hashed set of instructions, using said server hash table; and the hashed set of instructions are outputted as a hashed stream of instructions to said manufacturing machine over said communication channel. On the manufacturing machine side, the hashed stream is received, a local hash table corresponding to and synchronized, e.g., loosely synchronized (e.g., time-based, action based) to said server hash table is calculated on said manufacturing machine, the hashed stream is converted to a stream of instructions, using said local hash table into and the converted stream of instructions is used to operate the operational part of the manufacturing machine.

According to one embodiment, the method comprises during said hashing periodically regenerating said hash table and correspondingly regenerating said local hash table during said converting said hashed stream according to a first predetermined precise time algorithm or other algorithm based on action or happening which are known to both the streaming server and a manufacturing machine independently, without actual sending or receiving information between each other.

According to one embodiment, the method additionally comprises splitting said set of instructions into split sets of instructions, obfuscating each of said split sets of instructions, hashing each of said obfuscated splits, streaming said hashed obfuscated splits independently over said communication channel from the streaming server to the manufacturing machine, converting said streamed splits into split sets of instructions and combining said split sets of instructions into the stream of instructions for controlling the manufacturing machine.

According to one embodiment, providing said 3D model comprises creating a secure connection over a communication channel between the streaming server and a source of 3D models, hashing said 3D model at the source of 3D models, transferring said hashed 3D model to said streaming server, before and re-hashing said hashed 3D model for streaming to said manufacturing machine.

According to one embodiment of the invention, the virtual machine is created and destroyed for each instance of streaming. Destroying of the virtual machine after the streaming is completed provides higher security as the server hash table cannot be recovered or reused.

According to one embodiment, the method additionally comprises destroying said virtual machine and creating new virtual machine instance so that each instance of streaming is carried out by more than one virtual machine.

According to one embodiment, the method additionally comprises creating more than one virtual machine for each instance of streaming, so that different parts of said 3D model are streamed by different virtual machines.

According to one embodiment, the system further comprises a computer device with a source of 3D models and the computer device is connected to said streaming server over a communication channel, and the method further comprises the steps of creating on said computer device a first virtual machine for providing said 3D model to said streaming server, hashing said 3D model in said first virtual machine, creating a secured virtual machine instance on said streaming server, receiving hashed 3D model by said secured virtual machine instance, storing said hashed 3D model in memory hash table, materializing said secured virtual machine instance into hashed virtual machine instance image, said image is transferred to a second computer device connected to a manufacturing machine, running said secured virtual machine instance on said second computer device and streaming locally said hashes of the 3D model to said manufacturing machine.

According to one embodiment, the secure manufacturing system comprises a plurality of streaming servers. Each streaming server is connected to the Internet and said steps of secure streaming are carried out by more than one streaming server in concert. Each of said streaming servers may be set up to stream a different part of said 3D model to be manufactured.

The goals of the invention are also achieved by a secure numerically controlled manufacturing system, the system comprising a streaming server, having a conversion module adapted for receiving a 3D model representing a 3D object to be manufactured and for converting said 3D model into a set of manufacturing instructions, an obfuscating and hashing module adapted to obfuscate and to hash said set of manufacturing instructions into a hashed set of instructions, a dynamic hash tables database adapted to provide hash tables for said hashing module and a precise time based pseudo number generator module; a source of 3D models, connected to said streaming server over a communication channel; and a manufacturing machine, connected to said streaming server over a communication channel, said manufacturing machine comprising an operational module, a hash lookup module for converting said hashed set of instructions, a Dynamic Local Hash Tables Database for providing hash tables for hash lookup module and precise time based pseudo number generator module for independently synchronizing the hash tables of the manufacturing machine with the hash tables used on said streaming server. The system may comprise a plurality of streaming servers, each of said streaming servers connected to the Internet and adapted perform said secure streaming in concert.

### Brief description of drawings

Fig 1 is a block diagram of exemplary system that supports the claimed subject matter of the present application.

Fig 2 is a block diagram of one embodiment of the secure streaming server and stream processing module of the manufacturing machine.

Fig 3 is a block diagram of a multimode streaming system.

Fig 4 is a flow chart of a method according to one embodiment of the invention.

Fig 5 is a flow chart of a method according to another embodiment of the invention.

Fig 6 is a flow chart of a method according to yet another embodiment of the invention.

Fig 7 is a block diagram explaining a method according to still another embodiment of the invention.

Fig 8 is a block diagram of the system according to one embodiment of the invention.

### Description of embodiments

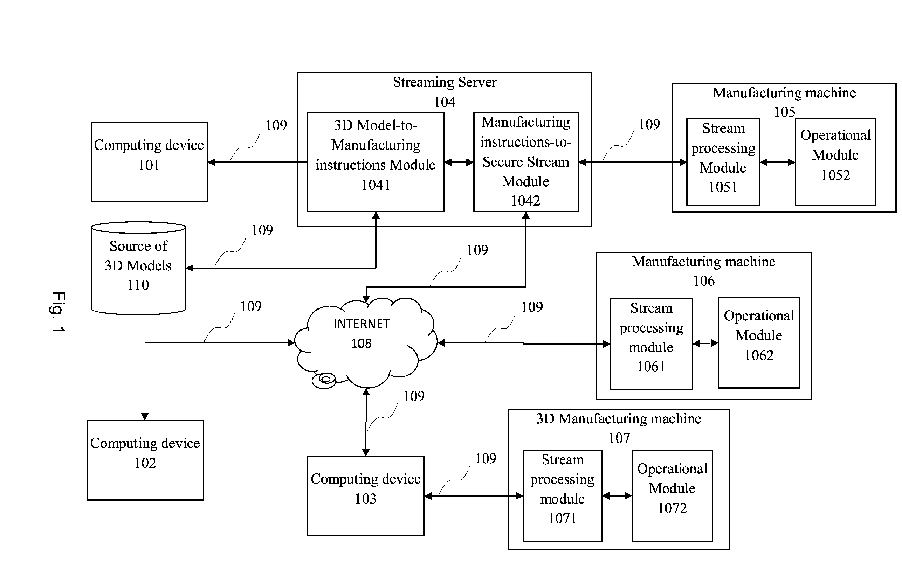

The block diagram of exemplary system that supports the claimed subject matter of this patent application is shown on Fig 1. The system comprises one or more computing devices 101, 102 and 103 that are connected to Streaming Server 104 over a communication channel 109, including the Internet 108. The Streaming Server has one or more Manufacturing Machines 105, 106 and 107 such as 3D printers, etc, connected to it over a communication channel 109. The system also comprises a source of 3D models 110 for providing 3D models for the streaming server. The connection between the Streaming Server 104 and manufacturing machines is preferably over a secured channel, such as TLS and SSL for the Internet. The Streaming Server comprises a module 1041 for converting 3D models into a set of manufacturing instructions and a module 1042 for converting said set of instructions into a set of encoded instructions. The manufacturing machine comprises a module for stream processing (1051, 1061 and 1071, correspondingly) and an operational module (1052, 1062 and 1072, correspondingly) responsible for manufacturing the 3D object.

The 3D model here is any computer model of a 3D object to be manufactured, such as file(s) in any of the computer aided design (CAD) file format, STL file(s), or additive manufacturing file format. It can also be one or more files providing views of the 3D object in any image file format.

The manufacturing machine can be any numerically controlled manufacturing machine, such as three-dimensional additive manufacturing machines configured for rapid prototyping, three-dimensional printing, two-dimensional printing, freeform fabrication, solid freeform fabrication, and stereolithography. Manufacturing machines can also include a subtractive manufacturing machine, including machines adapted for drilling, milling, turning, laser cutting, waterjet cutting, plasma cutting, wire electrical discharge cutting, cold, warm and hot forging metal fabrication, computer numerical controlled fabrication machine, and/or an additive manufacturing machine, and/or an injection molding machine. The manufacturing machines further include an extrusion manufacturing machine, a melting manufacturing machine, a solidification manufacturing machine, an ejection manufacturing machine, a die casting manufacturing machine, a stamping process machine, an assembly robot assembling 3D objects from pieces or blocks.

The manufacturing machines can include a manufacturing machine configured to perform manufacturing using one or more of metal, wood, ice, stone, glass, nuclear materials, pharmaceuticals, edible substances, living substances, cells, chemical molecules, sand, ceramic materials, aluminium, silicon, carbides, silicon nitrides, silicon carbides, metal/ceramic combinations including aluminium/silicon nitride, aluminium/silicon carbide, aluminium/zirconium and aluminium/aluminium nitride including materials alterable by friction, heating and cooling.

The manufacturing instructions can be, e.g., G-codes or other instructions according to any computer language, including numerical control (CNC) programming language, but also high-level languages like python, java, PHP, etc. Such manufacturing instructions define where to move to, how fast to move, and through what path to move the operative part of the manufacturing machine, such as the printing head, the extruder head, etc, as well as other manufacturing parameters.

The communication channel can be provided by any technology used for numerically controlling manufacturing machines, e.g., any computer network using any communication media (i.e., wireless or wired), communication protocol (e.g., Internet Protocol, or Ethernet protocol, etc), or scale (e.g., near field network, personal network, local area network, wide area network. Also virtual private networks, peer to peer connections, or over satellite communication channels may be used.

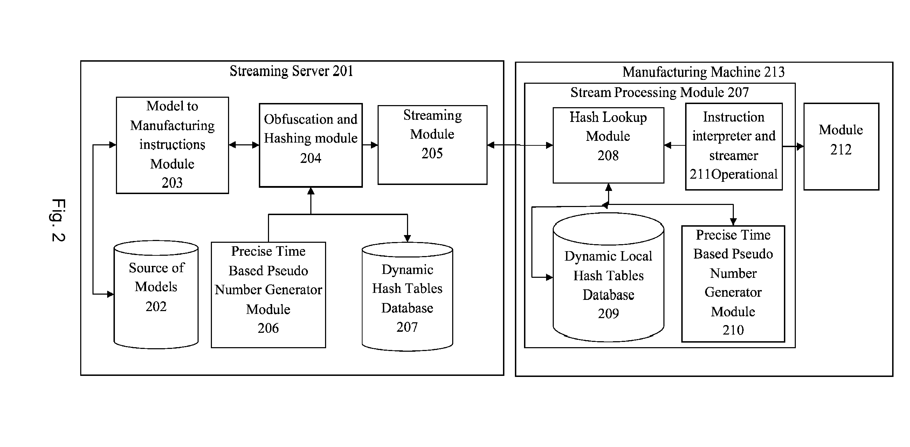

The block diagram shown on Fig 2 further clarifies the architecture of the streaming server 201 according to one embodiment and corresponding manufacturing machine 213 comprising a Stream Receiving Module 207 and an Operational Module 212. The Streaming server 201 according to this embodiment comprises a Source of 3D models 202 for providing 3D models, a module 203 for converting 3D model to manufacturing instructions, a module 204 for obfuscating and hashing the manufacturing instructions into a hashed stream, and a Streaming Module 205 for outputting said hashed stream over a computer network to the manufacturing machine. The hashing is controlled by Precise Time Based Pseudo Number Generator Module and performed using a hash table provided by a Dynamic Hash Tables Database 207.

The stream processing module 207 comprises a Hash Lookup Module 208 for converting the hashed stream into stream of instructions. This converting is controlled by Precise Time Based Pseudo Number Generator Module 210 and performed using a Dynamic Local Hash Tables Database 209. The converted stream of instructions is sent to the operational module using instruction interpreter and streamer 211.

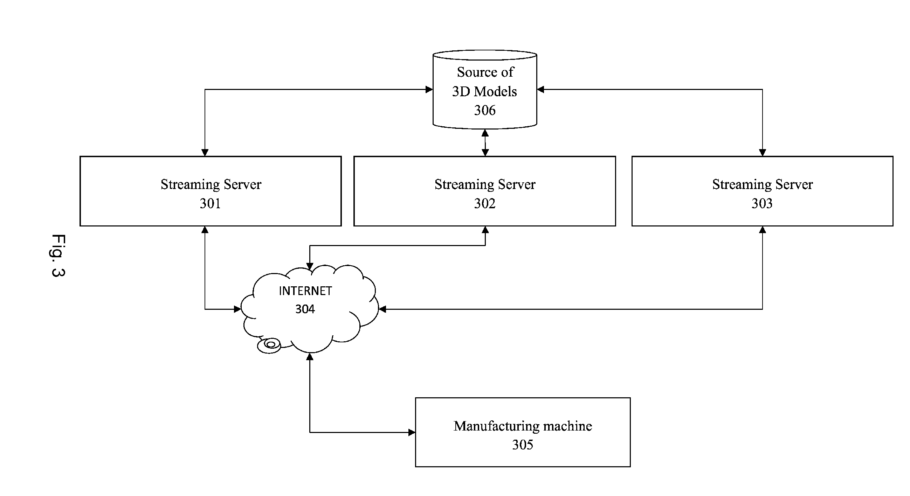

The block diagram of Fig 3 shows a multimode streaming system, comprising several Secure 3D Object Streaming Servers (shown as 301, 302 and 303), connected to computer network such as Internet 304, a manufacturing machine 305, also connected to the computer network, and at least one source of 3D models 306 for providing 3D models to be streamed.

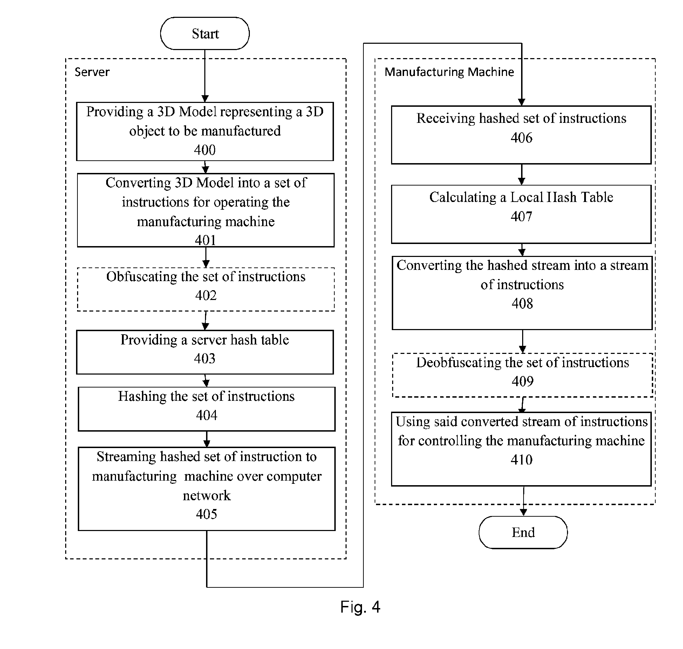

One embodiment of the secure streaming method is shown as a flowchart in Fig 4. The secure streaming method comprises the steps of providing a 3D model representing a 3D object to be reproduced 400, converting said 3D model into a set of instructions, such as G-codes for operating the manufacturing machine 401, optionally obfuscating said set of instructions 402; providing a server hash table 403, hashing said set of instructions 404 and streaming said hashed set of instructions to manufacturing machine over a communication channel 405. On the manufacturing machine side, the method comprises the steps of receiving the hashed set of instructions 406, calculating on said manufacturing machine a Local Hash Table corresponding to and loosely synchronized to said server hash table 407, converting the hashed stream into a stream of instructions, using said Local Hash Table 408, deobfuscating the stream of instructions, if necessary 409 and using the converted stream of instructions for controlling the operational part of the manufacturing machine 410.

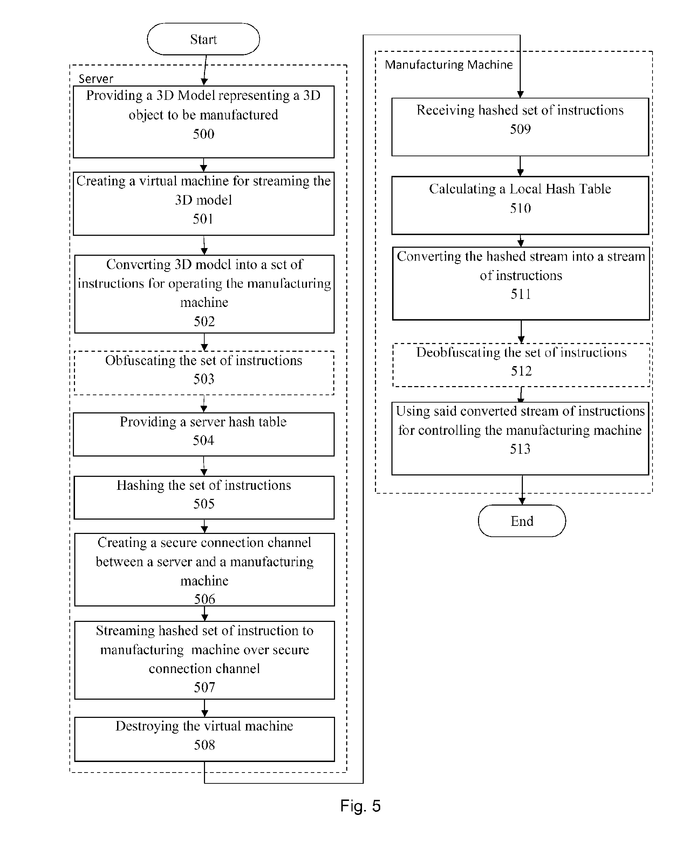

The flow diagram of Fig 5 shows a modified embodiment of the invention. The secure streaming method comprises the steps of providing a 3D model representing a 3D object to be reproduced 500, creating a virtual machine for streaming the 3D model 501, converting said 3D model into a set of instructions, such as G-codes for operating the manufacturing machine 502, optionally obfuscating said set of instructions 503; providing a server hash table 504, hashing said set of instructions 505, creating a secure connection channel between a server and a manufacturing machine 506, streaming said hashed set of instruction to manufacturing machine over secure connection channel 507 and destroying the virtual machine 508. This approach makes it impossible to recover the hash table used for hashing from the server side as it is permanently destroyed together with the virtual machine. On the manufacturing machine side, the method comprises the steps of receiving the hashed set of instructions 509, calculating on said manufacturing machine a Local Hash Table corresponding to and loosely synchronized to said server hash table 510, converting the hashed stream into a stream of instructions, using said Local Hash Table 511, deobfuscating the stream of instructions, if necessary 512 and using the converted stream of instructions for controlling the operational part of the manufacturing machine 513.

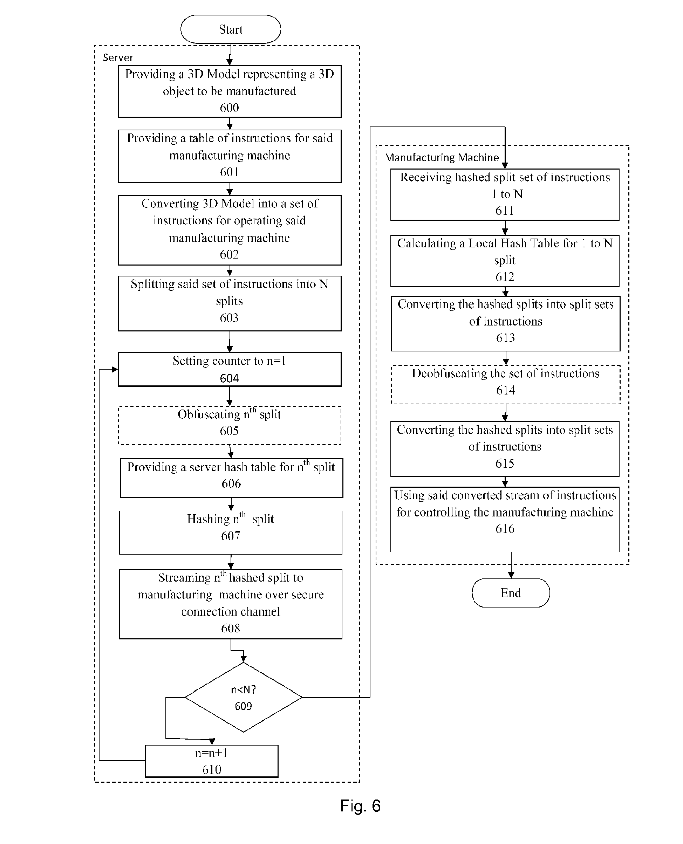

The flow diagram of Fig 6 shows another modified method. The secure streaming method comprises providing a 3D model representing a 3D object to be reproduced by a manufacturing machine 600; providing a table of instructions for said manufacturing machine 601; converting 3D model into a set of instructions for operating said manufacturing machine 602; splitting said set of instructions into N splits 603, setting a counter to one 604; optionally obfuscating n^{th} split 605, providing a server hash table for n^{th} split 606; hashing n^{th} obfuscated split 607; streaming n^{th} hashed set of instructions to manufacturing machine over secure connection channel 608, checking if further splits exist 609, and if so, repeating steps 605 to 608 for n=(n+1)^{th} split 610. This method provides increased security as several hash tables are used for hashing the same stream. On the manufacturing machine side, the method comprises the steps of receiving hashed split sets of instructions 1 to N 611, calculating Local Hash Table for each 1 to N hashed split corresponding to and loosely synchronized to corresponding n^{th} server hash table 612, converting said streamed hashed splits into split sets of instructions 613, deobfuscating the split sets of instructions, if necessary 614, combining said split sets of instructions into the stream of instructions for controlling the manufacturing machine 615 and using the converted stream of instructions for controlling the operational part of the manufacturing machine 616.

Method as shown on Fig 5 can be combined with the method as shown on Fig 6, i.e., by creating a virtual machine for obfuscating, hashing and streaming each n^{th} split and destroying the virtual machine as soon as the streaming of the n^{th} split is completed.

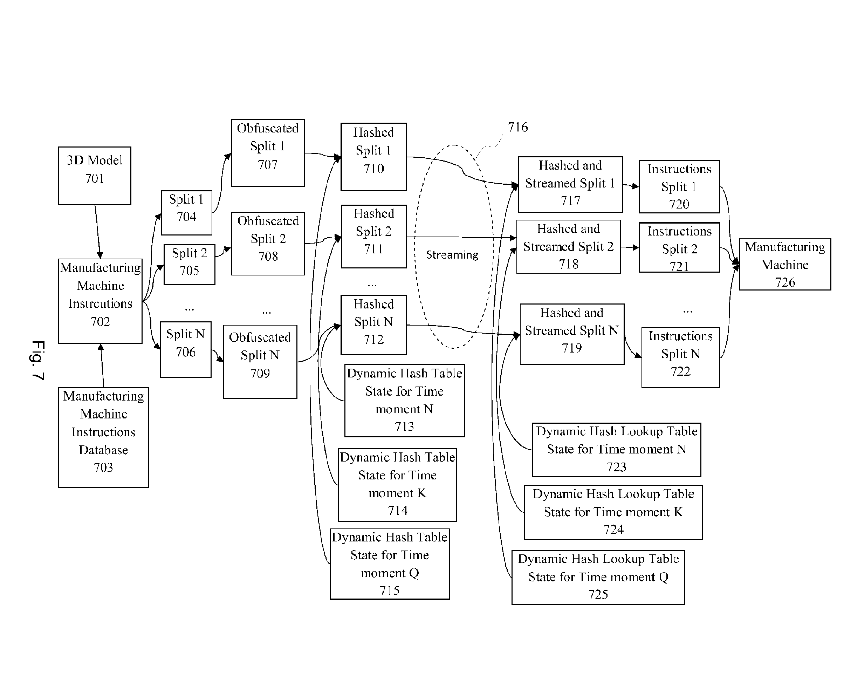

Fig 7 shows a block diagram of another embodiment. 3D model 701 is provided. Manufacturing Machine Instructions 702 are calculated, using Manufacturing Machine Instructions Database 703. The instructions are split into N splits shown as 704 to 706. Then, the splits 704 to 706 are processed in parallel by first obfuscating the splits into obfuscated splits 707 to 709, then hashing each of said obfuscated splits into hashed splits 710 to 712, using a Dynamic Hash Table State for Time moment N 713, a Dynamic Hash Table State for Time moment K 714, and a Dynamic Hash Table State for Time moment Q 715 correspondingly. Each of the hashed splits 710 to 712 are then independently streamed over a network 716 Time moments N, Q and K may be unrelated to the specific split to be processed, so one dynamic hash table can be used to process more than one split, as well as more than one dynamic hash table can be used to process a single split.

At the receiving side, at the manufacturing machine, each of the hashed and streamed splits 717 to 719 are converted back to instructions splits 720 to 722, using a Dynamic Hash Lookup Table State for Time Moment N 723, a Dynamic Hash Lookup Table State for Time Moment N 724 and a Dynamic Hash Lookup Table State for Time Moment N 725 respectively, the splits are combined and outputted to the operational part of the Manufacturing Machine 726.

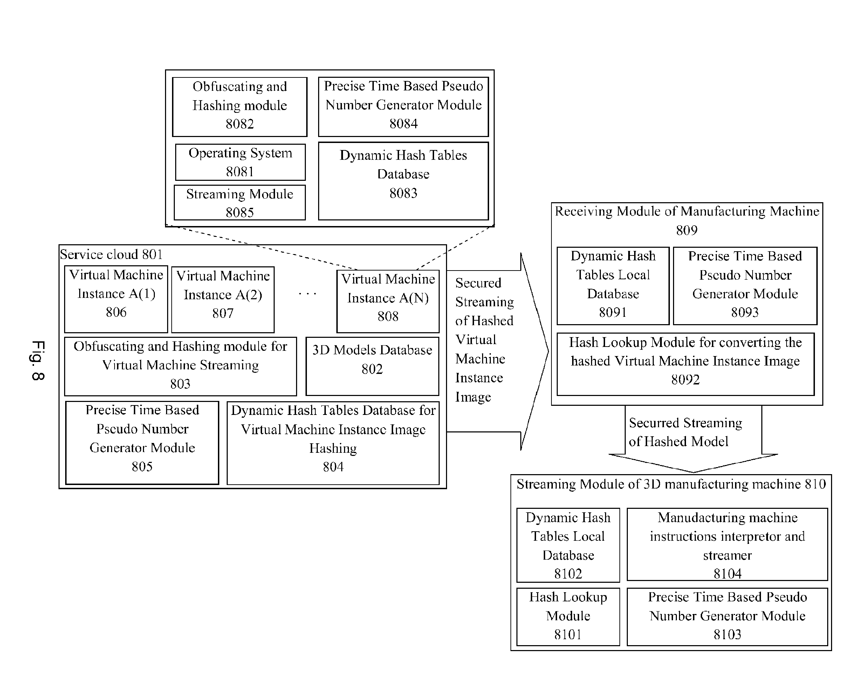

Fig 8 shows another embodiment of the invention. The server is run in a service cloud. The server comprises 3D models Database 802, Obfuscating and Hashing Module for Virtual Machine Streaming 803, A Dynamic Hash Tables Database for Virtual Machine Instance Image Hashing 804 and a Precise Time Based Pseudo Number Generator Module 805. Several virtual machine Instances A(1) to A(N) (shown as 806 to 808) can be initiated at the server, each virtual machine instance comprising an operating system 8081, obfuscating and hashing module 8082, a dynamic hash tables database 8083, a precise time based pseudo number generator module 8084 and a streaming module 8085. The hashed virtual machine instance image is streamed to the receiving module of manufacturing machine 809, said module comprising a Dynamic Local Hash Tables Database 8091, Hash Lookup Module for converting the Hashed Virtual Machine Instance image 8092 and precise time based pseudo number generator module 8093. The hashed 3D model is then securely streamed to be converted to the stream of instructions principally as described above, using a Streaming module of the manufacturing machine 810, comprising a Hash Lookup Module 8101, a Dynamic Local Hash Tables Database 8102, precise time based pseudo number generator module 8103 and Manufacturing machine instructions interpreter and streamer 8104.

It is obvious for the skilled person that the different examples of the methods as described above can be freely combined. Similarly, the different examples of the systems as described can be freely combined. For example, instead of or in addition to hashing, other methods of encoding can be used, e.g. obfuscating the instructions, applying arithmetic coding to the instructions, or encrypting the instructions. Virtual Machines can be run in a cloud system. The streaming can be provided as a service in a cloud system. Each computing device connected to the network can be provided with software to run as a secure streaming server, so the designers can provide secure streaming of their 3D models for manufacturing. In a peer to peer system, each computing device connected to the peer to peer network can be programmed to act as a secure streaming server. Each computing device connected to the computer network, including the peer to peer network can be modified to act as a source of 3D models. Such computing device may be adapted to securely stream the 3D models to another secure streaming server for streaming to the manufacturing machine, or the source of 3D models can be integrated with secure streaming server to directly stream to the manufacturing machine.

The cryptographic hash functions include such well known functions such as message digest algorithms (MD4, MD5), secure hash algorithms (SHA-1, SHA-2, SHA-3), Skein, Keccak, RadioGatun, PANAMA, and many others. The ideal cryptographic hash function has four main properties: it is easy to compute the hash value for any given message; it is infeasible to generate a message that has a given hash; it is infeasible to modify a message without changing the hash; it is infeasible to find two different messages with the same hash. Instead of cryptographic hash functions, other one way functions having similar properties (i.e., easy to compute on every input, but hard to invert given the image of a random input) can be used for hashing. Even though general purpose hash functions can be used, also special purpose hash function can be designed, taking into account the nature of the data to be hashed (i.e., the instructions for controlling the manufacturing machine). Checksum functions, cyclic redundancy checks, checksums and fingerprinting functions can be used for hashing. Hashing can be performed using nonlinear table lookup.

The method and the system for secure streaming may be also useful in other fields of technology where secure streaming is required, e.g., 1. for streaming control commands for controlling objects from a distance, or 2. for streaming commands from one operating module to another module of a car, aircraft, ship, electronic or computing device, etc. 3. for media broadcasting (radio, television), 4. for broadcasting of 3D object from storage module to a presenting module of 3D device, like 3D projectors in 3D cinema, 3D TV, SMART TV, 3D gaming consoles, 3D mobile Apps, 3D virtual reality glasses, augmented reality applications and devices, 3D hologram devices and applications. It is immediately apparent for the skilled person that in this case, instead of instructions for controlling the manufacturing machine, different types of instructions, suitable for controlling such device need to be used.

While the method is based on streaming the instructions to the manufacturing machine, it could also include temporarily buffering or caching the stream in the manufacturing machine or on the server side before sending.

## Claims

1. A streaming method in a secure manufacturing system comprising a streaming server and a numerically controlled manufacturing machine connected to said streaming server over a communication channel, the method comprises:
providing to the streaming server a 3D model of a 3D object to be manufactured by said manufacturing machine **characterized in that the method additionally comprises:**
on said streaming server, converting said 3D model into a set of instructions for operating said manufacturing machine;
encoding said set of instructions into a set of encoded instructions by applying simultaneously or in sequence at least one of the processes selected from the group consisting of calculating a set of hashed instructions by applying a cryptographic hash function to said set of instructions, calculating a set of obfuscated instructions by applying obfuscation function to said set of instructions, applying arithmetic coding to said set of instructions, applying digital fingerprints, calculating checksums, calculating hash values, calculating digital DNA, and encrypting said set of instructions; and
outputting said set of instructions to said manufacturing machine over said communication channel.

2. A method as in claim 1, comprising providing a server hash table on said streaming server; hashing said set of instructions into a hashed set of instructions, using said server hash table; and outputting said hashed set of instructions as a hashed stream of instructions to said manufacturing machine over said communication channel.

3. A method as in claim 2, comprising on the manufacturing machine receiving said hashed stream; calculating on said manufacturing machine a local hash table, corresponding to said server hash table; converting said hashed stream, using said local hash table into a stream of instructions and outputting said converted stream of instructions to operate the operational part of the manufacturing machine.

4. A method as in claims 2 to 3, comprising during said hashing repeatedly regenerating said hash table and correspondingly regenerating said local hash table during said converting said hashed stream according to a predetermined algorithm.

5. A method as in claim 1, comprising splitting said set of instructions into split sets of instructions, obfuscating each of said split sets of instructions, hashing each of said obfuscated splits, streaming said hashed obfuscated splits independently over said communication channel from the streaming server to the manufacturing machine, converting said streamed splits into split sets of instructions and combining said split sets of instructions into the stream of instructions for controlling the manufacturing machine.

6. A method as in claims 1 to 5, wherein said providing said 3D model comprises creating a secure connection over a communication channel between the streaming server and a source of 3D models, hashing said 3D model at the source of 3D models, transferring said hashed 3D model to said streaming server, and re-hashing said hashed 3D model for streaming to said manufacturing machine.

7. A method as in claims 1 to 6, creating a virtual machine on said streaming server for each instance of streaming said 3D model and destroying said virtual machine after said instance of streaming said 3D model is completed.

8. A method as in claim 7, comprising destroying said virtual machine and creating new virtual machine instance so that each instance of streaming is carried out by more than one virtual machine.

9. A method as in claims 7 to 8, comprising creating more than one virtual machine for each instance of streaming, so that different parts of said 3D model are streamed by different virtual machines.

10. A method as in claims 1 to 9, wherein the system comprises a computer device, comprising a source of 3D models, said computer device connected to said streaming server over a communication channel, the method comprising creating on said computer device a first virtual machine for providing said 3D model to said streaming server, hashing said 3D model in said first virtual machine, creating a secured virtual machine instance on said streaming server, receiving hashed 3D model by said secured virtual machine instance, storing said hashed 3D model in memory hash table, materializing said secured virtual machine instance into hashed virtual machine instance image, said image is transferred to a second computer device connected to a manufacturing machine, executing said secured virtual machine instance on said second computer device and streaming locally said hashes of the 3D model to said manufacturing machine.

11. A method as in claim 1 to 10, wherein said secure manufacturing system comprising a plurality of streaming servers, each streaming server connected to Internet and said steps of secure streaming are carried out by more than one streaming server in concert.

12. A method as in claim 11, comprising each of said streaming servers streaming a different part of said 3D model to be manufactured.

13. A secure numerically controlled manufacturing system, comprising:
a streaming server; comprising a conversion module adapted for receiving a 3D model representing a 3D object to be manufactured and converting said 3D model into a set of manufacturing instructions, an obfuscating and hashing module adapted to obfuscate and to hash said set of manufacturing instructions into a hashed set of instructions, a dynamic hash tables database adapted to provide hash tables for said hashing module and a precise time based pseudo number generator module;
a source of 3D models, connected to said streaming server over a communication channel; and
a manufacturing machine, connected to said streaming server over a communication channel, said manufacturing machine comprising an operational module, a hash lookup module for converting said hashed set of instructions, a Dynamic Local Hash Tables Database for providing hash tables for hash lookup module and precise time based pseudo number generator module for independently synchronizing the hash tables of the manufacturing machine with the hash tables used on said streaming server.

14. A system as in claim 13, comprising a plurality of streaming servers, each of said streaming servers connected to Internet and adapted perform said secure streaming in concert.
